(19) Europäisches Patentamt
European Patent Office
Office européen des brevets

(11) Numéro de publication: **0 302 802 A2**

(12) **DEMANDE DE BREVET EUROPEEN**

(21) Numéro de dépôt: **88420232.6**

(22) Date de dépôt: **30.06.88**

(51) Int. Cl.[4]: **C 08 L 83/04**
// C08K5/09, (C08L83/04, C08K5:09,5:14)

(30) Priorité: **03.07.87 FR 8709663**

(43) Date de publication de la demande: **08.02.89 Bulletin 89/06**

(84) Etats contractants désignés: **AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Barrandon, Georges**
**Le Champ Cidex D44**
**F-69440 Mornant (FR)**

**Lagarde, Robert**
**5, rue des Lilas**
**F-69320 Feyzin (FR)**

(74) Mandataire: **Vogt, Bernard et al**
**RHONE-POULENC INTERSERVICES Service Brevets Chimie Centre de Recherches des Carrières B.P. 62**
**F-69192 Saint-Fons Cédex (FR)**

(54) **Compositions organopolysiloxaniques vulcanisables à chaud permettant l'obtention d'élastomères transparents.**

(57) Ces compositions sont caractérisées par le fait de comprendre de 0,05 à 5 parties d'un oléate choisi parmi les oléates de métaux alcalins et l'oléate d'ammonium.

Utilisation des oléates mentionnés ci-dessus pour l'obtention d'élastomères transparents, après vulcanisation à chaud, et plus particulièrement d'une solution aqueuse d'oléate de sodium.

EP 0 302 802 A2

**Description**

**COMPOSITIONS ORGANOPOLYSILOXANIQUES VULCANISABLES A CHAUD PERMETTANT L'OBTENTION D'ELASTOMERES TRANSPARENTS**

La présente invention a pour objet des compositions organopolysiloxaniques qui conduisent après vulcanisation, après ajout par exemple de peroxydes, à des élastomères transparents ayant de bonnes propriétés physiques et mécaniques.

Un avantage de ces compositions résulte du fait qu'elles sont faciles à travailler à l'état cru et plus spécialement d'une bonne "travaillibilité" sur rouleaux, parce qu'elles ne collent pas à ces derniers.

Un autre avantage de ces compositions provient du fait qu'elles permettent l'obtention d'élastomères transparents n'ayant pas d'odeur désagréable et se démoulant facilement.

D'autres avantages des compositions selon la présente invention apparaîtront au cours de la description qui va suivre et plus particulièrement la facilité avec laquelle elles peuvent être préparées.

Il a donc été trouvé et c'est ce qui fait l'objet de la présente invention, des compositions organopolysiloxaniques vulcanisables à chaud et permettant l'obtention d'élastomères transparents, caractérisée en ce qu'elles comprennent en poids :

a) - 100 parties d'une gomme diorganopolysiloxanique ayant une viscosité supérieure à 1 000 000 mPa.s à 25 °C,

b) - 5 à 150 parties d'une charge renforçante,

c) - 0,1 à 7 parties d'un péroxyde organique et

d) - 0,05 à 5 parties d'un oléate choisi parmi les oléates de métaux alcalins et l'oléate d'ammonium.

L'objet de la présente invention concerne également les élastomères transparents obtenus avec les compositions ci-avant définies, après vulcanisation à chaud.

L'objet de la présente invention se rapporte de plus à l'utilisation d'oléate de métaux alcalins ou d'ammonium pour l'obtention d'élastomères transparents après vulcanisation à chaud, et plus spécialement à l'utilisation d'oléate de sodium en solution aqueuse.

Les compositions préferées selon la présente invention comprennent en poids :

a) - 100 parties d'une gomme diorganopolysiloxanique ayant une viscosité supérieure à 1 000 000 mPa.s à 25 °C, formée d'un enchaînement de motifs de formule $R_2SiO$, bloquée à chaque extrémité de sa chaîne par un motif de formule $R_3SiO_{0,5}$ et/ou radical de formule OR' ; dans ces formules les symboles R, identiques ou différents, représentent des radicaux méthyle, éthyle, n-propyle, phényle, vinyle et trifluoro-3,3,3 propyle au moins 60 % de ces radicaux étant méthyle et au plus 3 % étant vinyle, le symbole R' représente un atome d'hydrogène, un radical alcoyle ayant de 1 à 4 atomes de carbone, le radical bétaméthoxy-éthyle,

b) - 5 à 150 parties d'une charge renforçante constituée par de la silice dont la surface spécifique est d'au moins 50 $m^2/g$,

c) - 0,1 à 7 parties d'un péroxyde organique,

d) - 0,05 à 5 parties d'un oléate choisi parmi les oléates de métaux alcalins et l'oléate d'ammonium,

e) - 0 à 15 parties d'une huile diorganopolysiloxanique de viscosité d'au plus 5 000 mPa.s à 25 °C formée d'un enchaînement de motifs de formule $R''_2SiO$ bloquée à chaque extrémité de sa chaîne par un radical de formule OR' ; dans ces formules les symboles R'', identiques ou différents, représentent des radicaux méthyle, phényle, vinyle, au moins 40 % de ces radicaux étant méthyle et le symbole R' a la signification donnée ci-avant dans a).

Les différents constituants des compositions selon l'invention sont explicitées plus en détail ci-dessous.

Les gommes diorganopolysiloxaniques a) de viscosité supérieure à 1 000 000 mPa.s à 25 °C, de préférence supérieure à 2 000 000 mPa.s à 25 °C, sont des polymères linéaires, de poids moléculaire élevé, dont la chaîne diorganopolysiloxanique est constituée essentiellement des motifs de formule précitée $R_2SiO$ ; cette chaîne est bloquée à chaque extrémité par des motifs de formules $R_3SiO_{0,5}$ et/ou le radical de formule OR'. La présence, le long de la chaîne diorganopolysiloxanique, de faibles quantités de motifs autres que $R_2SiO$, par exemple de formules $RSiO_{1,5}$ et/ou $SiO_2$ n'est cependant pas exclue dans la proportion d'au plus 2 % par rapport au nombre de motifs $R_2SiO$. Bien que la signification des radicaux R et R'soient explicités ci-dessus, on doit préciser que par radical alcoyle, on entend des radicaux alcoyles en $C_1$-$C_4$ et plus spécialement les radicaux méthyle, éthyle, n-propyle et n-butyle.

A titre d'exemples concrets de motifs de formules $R_2SiO$ et $R_3SiO_{0,5}$ et de radicaux de formule OR', peuvent être cités ceux de formules :

$(CH_3)_2SiO$, $CH_3(CH_2=CH)SiO$, $CH_3(C_6H_5)SiO$, $(C_6H_5)_2SiO$,
$CH_3(C_2H_5)SiO$, $(CH_3CH_2CH_2)CH_3SiO$, $CH_3(n.C_3H_7)SiO$
$-(CH_3)(C_6H_5)(CH_2=CH)SiO_{0,5}$
-OH, $-OCH_3$, $-OC_2H_5$, -O-n.$C_3H_7$, -O-iso.$C_3H_7$, -O-n.$C_4H_9$,
$-OCH_2CH_2OCH_3$

Ces gommes a), qui peuvent être utilisées en mélange pour représenter les 100 parties de gomme des compositions selon la présente invention, comprennent généralement moins de 3 % de groupements vinyle et le plus souvent ces groupements vinyle représentent de 0,005 à 1,5 % du nombre de radicaux liés aux atomes de silicium.

Les gommes a) sont commercialisées par les fabricants de silicones ; d'autre part, elles peuvent être fabriquées en opérant selon les techniques déjà connues.

La charge renforçante b) est constituée essentiellement de silice, à raison de 5 à 150 parties, de préférence de 8 à 100 parties, pour 100 parties de la gomme diorganopolysiloxanique a). Cette charge renforçante est choisie parmi les silices de combustion et les silices de précipitation, qui ont une surface spécifique, mesurée selon les méthodes BET et CTAB, d'au moins 50 $m^2/g$, de préférence supérieure à 70 $m^2/g$, une dimension moyenne des particules primaires inférieure à 80 nm et une densité apparente inférieure à 200 g/litre.

Ces silices peuvent être incorporées telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 18 % environ.

L'huile diorganopolysiloxanique citée en e) est utilisée à raison de 0 à 15 parties, de préférence de 0,3 à 12 parties pour 100 parties de gomme a). Cette huile ou ces huiles sont des polymères linéaires de viscosité relativement peu élevée, au plus 5 000 mPa.s à 25 °C, de préférence au plus 4 000 mPa.s à 25 °C, dont la chaîne diorganopolysiloxanique est formée essentiellement des motifs de formule précitée $R''_2SiO$ ; cette chaîne est bloquée à chaque extrémité par un radical de formule précitée OR'. Au moins 40 % des radicaux R'' sont des radicaux méthyle, de préférence au moins 45 %.

La signification des symboles R'' et R' a été explicitée précédemment.

A titre d'exemples concrets de motifs de formule $R''_2SiO$ et de radicaux de formule OR', peuvent être cités ceux de formules :

$(CH_3)_2SiO$, $CH_3(CH_2=CH)SiO$, $CH_3(C_6H_5)SiO$, $(C_6H_5)_2SiO$,

$C_6H_5(CH_2=CH)SiO$,

$-OH$, $-OCH_3$, $-OC_2H_5$, $-O\text{-}n.C_3H_7$, $-OCH_2CH_2OCH_3$.

De préférence, sont utilisées :

- des huiles diméthylpolyxiloxaniques bloquées à chaque extrémité de leur chaîne par des radicaux hydroxyle, méthoxyle, bétaméthoxyéthoxyle, de viscosité 10 à 200 mPa.s à 25 °C ;
- des huiles méthylphénylpolysiloxaniques, constituées de motifs $CH_3(C_6H_5)SiO$, bloquées à chaque extrémité de leur chaîne par des radicaux hydroxyle et/ou méthoxyle, de viscosité 40 à 2 000 mPa.s à 25 °C.

L'utilisation de ces huiles e) a pour objet d'empêcher les compositions de l'invention de subir une évolution au cours du stockage, et plus précisément de se structurer, de durcir ; ce sont donc des agents "antistructures". Leur utilisation est surtout recommandée lorsque les quantités de silices renforçantes b) sont élevées, par exemple au-dessus de 30-40 parties pour 100 parties de gommes a).

D'autres agents antistructures peuvent remplacer en totalité ou en partie, les huiles e), par exemple le diphénylsilanediol et les silanes de formules :

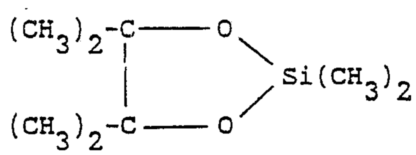

et

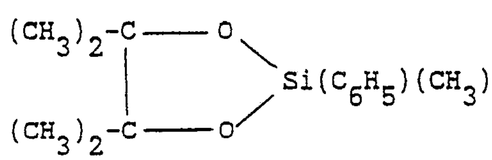

Cependant, ils sont souvent plus coûteux et/ou exigent plus de travail pour leur dispersion dans les compositions de l'invention que les huiles e).

Les peroxydes organiques c) sont utilisés à raison de 0,1 à 7 parties, de préférence 0,2 à 5 parties, pour 100 parties des gommes a). Ils sont bien connus des techniciens et comprennent plus spécialement le peroxyde de benzoyle, le peroxyde dichloro-2,4 benzoyle, le peroxyde de dicumyle, le bis(t-butylperoxy)é,5 diméthyl-2,5 hexane, le perbenzoate de t-butyle, le carbonate de peroxy t-butyle et d'isopropyle, le peroxyde di-t-tubyle, le bis(t-butylperoxy)-1,1 triméthyl-3,3,5 cyclohexane.

Ces divers peroxydes se décomposent à des températures et à des vitesses parfois différentes. Ils sont choisis en fonction des conditions de durcissement exigées.

En ce qui concerne l'oléate d) des compositions selon la présente invention, il est utilisé à raison de 0,05 à 5 parties (en poids), de préférence de 0,08 à 4 parties, par rapport à 100 parties de gommes. Cet oléate est

choisi parmi les oléates des métaux alcalins et l'oléate d'ammonium. De façon avantageuse l'oléate utilisé est dissous dans un corps liquide, par exemple dans de l'eau. De façon avantageuse l'oléate utilisé est l'oléate de sodium en solution aqueuse.

Dans les compositions selon la présente invention les parties (toujours exprimées en poids) de l'oléate utilisé se rapportent à des parties d'oléate sec, même si préférentiellement et de façon avantageuse on utilise des solutions d'oléate.

Les compositions selon la présente invention comprennent de plus, de façon très avantageuse, 0,02 à 4 parties (pour 100 parties de gomme a)), de préférence 0,03 à 3 parties d'un composé organosilicique comportant, relié à l'atome de silicium, au moins un groupe acryloyloxyalkylène ou méthacryloyloxyalkylène, ledit composé ayant la formule :

$$CH_2 = CR_3COO(CH_2)_wSi(OR_4)_{3-u}$$
$$\qquad\qquad\qquad\qquad | $$
$$\qquad\qquad\qquad\qquad (R'')_u$$

dans laquelle le symbole R″ représente des radicaux méthyle, phényle, vinyle, le symbole $R_3$ représente un atome d'hydrogène, le radical méthyle, le symbole $R_4$ représente un radical méthyle, éthyle, n-propyle, bétaméthoxyéthyle, le symbole w représente un nombre de 1 à 5 et le symbole u représente un nombre de 0 à 2.

Des produits de ce type sont décrits, par exemple dans le brevet américain 3 567 497. A titre d'exemples concrets peuvent être cités les produits ayant les formules suivantes :

$CH_2 = CH\text{-}COOCH_2Si(OCH_3)_3$

$CH_2 = CH\text{-}COOCH_2Si(OCH_2CH_2OCH_3)_2C_6H_5$

$CH_2 = CH\text{-}COO(CH_2)_3Si(OC_2H_5)_3$

$CH_2 = C(CH_3)COO(CH_2)_3Si(OCH_3)_3$

$CH_2 = C(CH_3)COO(CH_2)_3SiCH_3(OCH_3)_2$

$CH_2 = C(CH_3)COO(CH_2)_5Si(OCH_3)_3$

La préparation des compositions conformes à l'invention s'effectue à l'aide de moyens mécaniques connus, par exemple de pétrins, de mélangeurs à cylindres, de mélangeurs à vis. Les divers constituants sont incorporés dans ces appareils dans un ordre pouvant être quelconque. Il est toutefois recommandé de charger tout d'abord les gommes a) et les silices renforçantes b) et en dernier lieu les peroxydes d).

Les compositions obtenues sont stables au stockage ; par ailleurs, elles possèdent la faculté, très recherchée par les fabricants et formulateurs, de se travailler aisément sur les mélangeurs à cylindres du fait de leur cohésion et tenacité élevées. Ainsi, elles ne collent pas sur les cylindres même lorsqu'elles sont façonnées en feuilles de 0,5 mm d'épaisseur.

Elles sont durcissables en élastomères transparents par chauffage sous pression ou à l'air ambiant à des températures de l'ordre de 100 à 350 °C. La durée de chauffage varie évidemment avec la température, la pression et la nature des peroxydes ; elle est généralement de plusieurs minutes vers 100-200 °C et de quelques secondes vers 250-350 °C.

Les élastomères transparents possèdent dès la fin de leur première phase de réticulation, c'est-à-dire avant la phase éventuelle de post-chauffage, de bonnes caractéristiques physiques et plus précisément une résilience élevée et une excellente tenue à la déformation à la compression. Ils conservent leur transparence même après une longue période d'abandon à température élevée, par exemple vers 200-250 °C.

Les compositions conformes à l'invention sont utilisables pour la fabrication par moulage, calandrage, extrusion, de nombreuses pièces transparentes en élastomères silicones ou d'objets recouverts par ces élastomères.

Ces pièces transparentes peuvent être des joints, des profilés, des tubes, des objets de protection de formes diverses, destinées par exemple aux domaines de la mécanique, de l'automobile, du bâtiment (joints d'huisserie), de l'électroménager (joints de portes de fours, de réfrigérateurs).

Les objets recouverts d'élastomères transparents concernant plus spécialement les câbles électriques entourés d'une gaine en élastomère, les associations composites constituées de tissus de verre (ou d'autres matériaux plats) et de feuilles d'élastomère.

Ces pièces transparentes peuvent être utilisées également dans le domaine médical, pharmaceutique, alimentaire, grâce à la parfaite inocuité de ces élastomères silicones. Elles peuvent, par exemple, avoir la forme de tubes (pour les appareils de transfusion sanguine, de dialyse), de sacs à sang, de tétines, de bouchons .....

Les exemples suivants montrent que l'oléate de sodium est indispensable dans une composition ayant une bonne travaillibilité sur cylindres et permettant l'obtention d'élastomères vulcanisables à chaud ayant une bonne transparence.

- EXEMPLE 1 :

On mélange intimement à l'aide d'un malaxeur, les ingrédients suivants :
- 15 parties d'une gomme diorganopolysiloxanique, de viscosité environ 25 millions de mPa.s (millipascal.secondes) à 25 °C, bloquée à chaque extrémité de sa chaîne par un motif diméthylvinylsiloxy, comportant 120 ppm (parties par million) de groupement diméthylvinylsiloxy en bout de chaîne et aucun motif vinyl dans sa chaîne,
- 85 parties d'une gomme diorganopolysiloxanique, de même viscosité que la gomme ci-avant, bloquée à chaque extrémité de sa chaîne par un groupement diméthylvinylsiloxy, comportant 360 ppm de motifs vinyle dans sa chaîne et 120 ppm de motifs vinyle en bout de chaîne,
- 0,8 partie d'une huile diméthylpolysiloxanique de viscosité 50 mPa.s à 25 °C, bloquée à chaque extrémité de sa chaîne par un radical hydroxylé lié à l'atome de silicium terminal,
- 0,2 partie d'un silane de formule :
$CH_2 = C(CH_3)COO(CH_2)_3Si(OCH_3)_3$
- 0,2 partie d'oléate de sodium (par ajout d'une solution aqueuse d'oléate de sodium à 33,3 % en poids),
- 39 parties d'une silice de précipitation de surface spécifique 156 $m^2/g$ (mètres carrés par gramme).

Après la fin de l'introduction des produits, le mélange est chauffé 1 heure à 170 °C, puis refroidi.

Le mélange homogène obtenu est sorti du malaxeur puis transféré sur un mélangeur à deux cylindres. On lui incorpore alors, à l'aide de ce mélangeur, 0,5 partie de diméthyl-2,5, di(tertiobutylperoxy-2,5)hexane. On constate au cours de cette étape que la composition, d'une part ne colle pas à la surface des cylindres, et d'autre part se travaille aisément grâce à sa bonne cohésion.

La composition ainsi obtenue est durcie (vulcanisée) en élastomère par chauffage dans des moules pendant 10 minutes à 170 °C sous une pression de 30 bars. L'élastomère obtenu est transparent.

Dans le tableau ci-joint on trouve les caractéristiques de l'élastomère recuit 4 heures à 200 °C ou 3 heures à 250 °C, tout en conservant sa transparence. Chacune des valeurs figurant dans le tableau est la moyenne des valeurs obtenues pour 10 essais.

Dans ce tableau les abréviations ont la signification suivante :
- P. WILLIAMS : selon la norme ASTM D 926,
- N.C.C. : non collant sur cylindres par détermination visuelle après calandrage,
- T.C. : tenue à cru, c'est-à-dire aptitude au calandrage pour obtenir des feuilles de faible épaisseur. La composition doit pour cela présenter à cru une cohésion suffisante.

Les valeurs consignées dans le tableau en ce qui concerne N.C.C. et T.C. sont appréciées de la façon suivante :
+ : plutôt mauvais
++ : plutôt bon
+++ : très bon
- T.R. : transparence par mesure de l'indice de turbidité dans les conditions suivantes : la source lumiseuse (lampe à vapeur de mercure) a une longueur d'onde de 0,546 micron. La turbidité T.R. s'exprime par la relation
$T.R. = \frac{1}{e} \log \frac{Io}{I}$ e : épaisseur en cm de l'élastomère
Io : intensité de la lumière incidente
I : intensité de la lumière transmise
- D.S.A. : dureté Shore A selon la norme ASTMD 2240,
- R.L. : retrait linéaire en %,
- R.R. : résistance à la rupture en MPa (mégapascals) selon la norme AFNOR T 46002 correspondant à la norme ASTMD 412,
- A.R. : allongement à la rupture en % selon la norme AFNOR T 46002,
- R.D. : résistance à la déchirure en kN/m (kilo newton-mètre) selon la norme ASTM D 624,
- D.R.C. : déformation rémanente à la compression mesurée en %,
- R.Z. : résilience ZWICK en % selon la norme DIN 53512.

- EXEMPLE 2 :

Cet exemple est fait dans les mêmes conditions que celles de l'exemple 1 mais on n'introduit pas d'oléate de sodium dans la composition.

La composition n'est pas facile à travailler sur cylindres et colle à ces derniers.

- EXEMPLE 3 :

Cet exemple est fait dans les mêmes conditions que celles de l'exemple 1, mais on remplace la silice de précipitation par une silice de combustion de même surface. On obtient alors un mélange à propriétés mécaniques améliorées se travaillant bien sur cylindres et pouvant être extrudé en vulcanisation à l'air chaud (absence de bullage).

TABLEAU

| | Exemple 1 | Exemple 2 | Exemple 3 |
|---|---|---|---|
| Composition | | | |
| P. WILLIAMS | 195 | 222 | 235 |
| N.N.C. | +++ | + | ++ |
| T.C. | +++ | + | +++ |
| Après 10 minutes à 170 °C | | | |
| D.S.A. | 50 | 52 | 54 |
| R.L. | 3,55 | 3,20 | 3,2 |
| R.R. | 7,70 | 7,25 | 9,0 |
| A.R. | 390 | 395 | 420 |
| R.D. | 11 | 11 | 16 |
| R.Z. | 52 | 51 | 45 |
| TR indice de turbidité | 6,3 | 6,4 | 5,0 |
| Après recuit 4 heures à 200 °C | | | |
| D.S.A. | 55 | 56 | 56 |
| R.L. | 3,70 | 3,70 | 3,40 |
| R.R. | 6,95 | 6,00 | 8,5 |
| A.R. | 320 | 285 | 350 |
| R.D. | 10 | 10 | 17 |
| D.R.C. | 20 | 22 | |
| R.Z. | 58 | 57 | |
| TR indice de turbidité | 6,7 | 6,7 | 5,2 |
| Après recuit 3 heures à 250 °C | | | |
| D.S.A. | 51 | 53 | 80 |
| R.L. | 4,35 | 4,35 | 5,9 |
| R.R. | 4,85 | 4,40 | 4,5 |
| A.R. | 245 | 225 | 100 |
| R.D. | 10 | 10 | 10 |
| TR indice de turbidité | 5,8 | 5,7 | 5,0 |

**Revendications**

1. - Compositions organopolysiloxaniques vulcanisables à chaud et permettant l'obtention d'élastomères transparents, caractérisée en ce qu'elles comprennent en poids :

a) - 100 parties d'une gomme diorganopolysiloxanique ayant une viscosité supérieure à 1 000 000 mPa.s à 25 °C,

b) - 5 à 150 parties d'une charge renforçante,

c) - 0,1 à 7 parties d'un péroxyde organique et

d) - 0,05 à 5 parties d'un oléate choisi parmi les oléates de métaux alcalins et l'oléate d'ammonium.

2. - Compositions selon la revendication 1, caractérisées en ce que la gomme citée en a), formée d'un enchaînement de motifs de formule $R_2SiO$ est bloquée à chaque extrémité de sa chaîne par un motif de formule $R_3SiO_{0,5}$ et/ou un radical de formule OR', dans ces formules les symboles R, identiques ou différents, représentant des radicaux méthyle, éthyle, n-propyle, phényle, vinyle et trifluoro-3,3,3 propyle, au moins 60 % de ces radicaux étant méthyle et au plus 3 % étant vinyle, tandis que le symbole R' représente un atome d'hydrogène, un radical alcoyle ayant de 1 à 4 atomes de carbone, le radical bétaméthoxy-éthyle.

3. - Compositions selon la revendication 1 ou 2, caractérisées en ce que la charge renforçante est une silice de combustion ou de précipitation de surface spécifique d'au moins 50 g/m$^2$.

4. - Compositions selon l'une quelconque des revendications précédentes, caractérisées en ce qu'elles comprennent en outre e) jusqu'à 15 parties d'une huile diorganopolysiloxanique de viscosité d'au plus 5 000 mPa.s à 25 °C formée d'un enchaînement de motifs de formule $R''_2SiO$, bloquée à chaque extrémité de sa chaîne par un radical de formule OR', dans ces formules les symboles R'', identiques ou différents, représentent des radicaux méthyle, phényle, vinyle, au moins 40 % de ces radicaux étant méthyle et le symbole R' représente un atome d'hydrogène, un radical alcoyle ayant de 1 à 4 atomes de carbone, le radical bétaméthoxy-éthyle.

5. - Compositions selon l'une quelconque des revendications précédentes, caractérisées en ce qu'elles comprennent en plus f) 0,02 à 4 parties d'un composé organosilicique comportant relié à l'atome de silicium au moins un groupe acryloyloxyalkylène ou méthacryloyloxyalkylène, ledit composé ayant la formule :

$$CH_2 = CR_3COO(CH_2)_wSi(OR_4)_{3-u}$$
$$|$$
$$(R'')_u$$

dans laquelle le symbole R'' représente des radicaux méthyle, phényle, vinyle, le symbole $R_3$ représente un atome d'hydrogène, le radical méthyle, le symbole $R_4$ représente un radical méthyle, éthyle, n-propyle, bétaméthoxyéthyle, le symbole w représente un nombre de 1 à 5 et le symbole u représente un nombre de 0 à 2.

6. - Compositions selon l'une quelconque des revendications précédentes, caractérisées en ce que l'oléate est introduit dans les compositions sous forme de solution.

7. - Compositions selon la revendication 6, caractérisées en ce que l'oléate est de l'oléate de sodium et en ce qu'il est introduit en solution aqueuse.

8. - Elastomères transparents obtenus avec les compositions selon l'une quelconque des revendications précédentes après vulcanisation à chaud.

9. - Utilisation d'oléate de métaux alcalins ou d'oléate d'ammonium pour l'obtention d'élastomères organopolysiloxaniques transparents après leur vulcanisation à chaud.

10. - Utilisation d'oléate de sodium en solution aqueuse pour l'obtention d'élastomères organopolysiloxaniques transparents après leur vulcanisation à chaud.